# EUROPEAN PATENT SPECIFICATION

(11) **EP 0 540 641 B1**
(45) Date of publication and mention of the grant of the patent: **12.03.1997**
(21) Application number: 91914095.4
(22) Date of filing: 24.07.1991
(51) Int. Cl.: C08J 3/02, C08K 5/09, C08L 23/00

(54) **BIODEGRADABLE POLYMER BLEND CONTAINING 3-HYDROXYBUTYRATE/3-HYDROXYVALERATE COPOLYMER**
BIOABBAUBARE, 3-HYDROXYBUTYRAT/3-HYDROXYVALERAT COPOLYMER ENTHALTENDE POLYMERMISCHUNG
MELANGE POLYMERE BIODEGRADABLE CONTENANT UN COPOLYMERE DE 3-HYDROXYBUTYRATE/3-HYDROXYVALERATE

(30) Priority: 25.07.1990 GB 9016345
(43) Date of publication of application: 12.05.1993
(73) Proprietor: MONSANTO COMPANY, St. Louis Missouri 63167 (US)
(72) Inventor: WEBB, Andrew, Yarm TS15 9SD (GB); CARLSON, Allen, W., Ridgewood, NJ 07450 (US); GALVIN, Thomas, Jerome, Wilmington, DE 19807 (US)
(74) Representative: Nash, Brian Walter
(86) International application number: US9105245
(87) International publication number: WO9201733

(56) References cited:
- WO-A-91/06601
- US-A- 3 929 937
- US-A- 4 393 167
- US-A- 4 620 999
- US-A- 4 900 299

## Description

This invention relates to biodegenerable polymer blends comprising 3-hydroxybutyrate copolymer.

There is an increasing need for plastics materials which degenerate after use to environmentally acceptable waste products when in contact with microbiologically active systems such as soil, compost, activated sludge and sediment.

Conventional plastics materials containing synthetic polymers such as low density polyethylene (LDPE) and ethylene vinyl acetate (EVA) generally do not degenerate, i.e. disintegrate or degrade, through microbiological action in time periods of less than five years.

An LDPE-containing biodegenerable composite comprising LDPE and starch has been proposed. When in the form of a film, it is believed that the composite is degenerable by microbiological action within five years. Unfortunately, high levels of starch have been shown to be required before a suitable biodegenerable composite is obtained. The presence of high levels of starch have an unacceptable detrimental effect on the physical and processing characteristics of the composite. An ethylene-acrylic acid copolymer has been used to improve the physical properties of LDPE-starch composite, but only at low starch levels, at which levels the composite is not suitably biodegenerable.

US-A-3929937 discloses a composition containing a normally solid addition polymer and a biodegradable thermoplastic oxyalkanoyl polymer. The addition polymer has a softening temperature at least 150°C higher than that of the oxyalkanoyl polymer and is present in particulate form in that polymer, not as a blend therewith.

US-A-4900299 discloses microbiologically produced copolymers of 3-hydroxybutyric acid and 3-hydroxyvaleric acid. Since these copolymers have melting points higher than that of most readily available addition polymers, they could not be used in the compositions disclosed in US-A-3929937. The softening temperature relationship of US-A-3929937 limits its disclosure to synthetic oxyalkanoyl polymers, which are less readily biodegradable than the microbiologically produced copolymers of US-A-4900299.

We have found that a biodegenerable plastics composition having satisfactory physical properties comprises a microbiologically produced copolymer comprising 3-hydroxybutyrate and at least one of polyethylene, polystyrene, and an ethylene copolymer.

Accordingly to the invention a biodegenerable plastics composition comprises at least one synthetic polymer selected from the class consisting of polyethylene, polystyrene and ethylene copolymer, blended with 10 to 90% w/w on said composition of a biodegradable material at least 20% w/w of which is microbiologically produced copolymer "PHBV" containing 3-hydroxybutyrate and 3-hydroxyvalerate.

Preferably the biodegradable material represents between 20 and 50 % w/w of the composition and at least half thereof is said microbiologically produced copolymer. Compositions showing particularly good biodegenerable characteristics contain at least 20% w/w of said microbiologically produced copolymer.

The ethylene copolymer may be one or more copolymers of ethylene with one or more carboxylic derivatives of ethylene, especially acrylic acid, methacrylic acid, maleic anhydride, ethyl acrylate and vinyl acetate (EVA). A particularly preferred ethylene copolymer is EVA, especially containing 5 to 30 w/w % of vinyl acetate on the total of ethylene and vinyl acetate as illustrated in Examples 3 and 4 below. The EVA preferably has a melt index (ASTMD 1238) in the range 1.0 to 5.0, especially 1.5 to 3.5, g/10 min. It is advantageous for some uses to provide the EVA as a mixture with wax grade EVA in proportions in the range 90:10 to 40:60.

The composition , especially if containing high levels (at least 20% w/w) of microbiologically produced copolymer may also contain one or more biodegradable or environmentally acceptable improvers to optimise characteristics in respect of particular uses. Such improvers include plasticisers, processability improving agents and toughening agents. Examples of such plasticisers are glycerol triesters such as triacetin, glycerol tributyrate and glycerol tricaproate, in particular triacetin. An example of a biodegradable toughening agent is a crystalline polyester such as polycaprolactone.

The composition may also contain at least one biodegradable filler such as starch or cellulose, and/or environmentally acceptable filler such as calcium carbonate or talc.

The presence of at least one improver and/or filler is particularly preferred where the total biodegradable material represents at least 40 % w/w of the composition; and then it is particularly preferred that the microbiologically produced copolymer represent 35 to 65 % w/w of said biodegradable material.

The physical properties of the composition may be altered by varying the relative proportions of the constituents. Thus, the Young's Modulus of such plastics compositions may vary between 70 and 225 (MPa), the Flexural Modulus may vary between 200 and 500 (Mpa), and the Extension at Break may vary between 50 and 500%. Particularly useful plastics compositions exhibit physical properties within at least two of the above ranges.

Particularly useful compositions comprising a binary blend of said biodegradable material with EVA contain between 5 and 50%, particularly between 10 and 40%, w/w of EVA.

A particularly useful composition comprises a ternary blend of (1) said biodegradable material, (2) at least one polymer selected from polyethylene and polystyrene, and (3) ethylene copolymer as hereinbefore defined. A particularly preferred such composition comprises said biodegradable material, polyethylene and EVA. The preferred such composition contains between 5 and 30 % w/w polyethylene (especially low density polyethylene) LDPE, and between 5 and 20 % w/w of EVA.

The microbiologically produced copolymers of 3-hydroxybutyrate and 3-hydroxyvalerate herein termed PHBV, may include minor proportions of other oxy-alkanoate residues. The PHBV copolymers show better compatibility with LDPE and EVA as compared with PHB homopolymer. Especially preferred are PHBV copolymers containing at least 2 especially at least 4, mol % of 3-hydroxyvalerate, and more particularly those copolymers containing 3 and 25, especially between 5 and 15, mol %.

The molecular weight of the PHBV in the composition is preferably at least 300000, especially at least 500000 and up to the limit of convenient processability, for example 1.5 million. Such molecular weights are characteristic of the polymer as now available commercially.

The composition may additionally contain one or more components such as fibrous fillers (which may be biodegenerable), pigments, anti-oxidants (other than those inhibiting biodegeneration), antistatic agents, stabilisers, foaming agents, slip agents, antiblocking agents and others commonly used in plastics processing. To facilitate processing and development of crystallinity of the PHBV, the composition may contain a nucleating agent as described below.

In all, the choice of constituents and their proportions is preferably such that articles made from the composition are denser than fresh water.

The invention provides also methods of making the composition by mixing the constituents in conditions in which at least one of its polymeric constituents is at least partly in liquid form. Examples of such methods are solution blending, slurry blending and melt blending. Preferably the constituents of the mixture are mechanically worked together, for example by screw-extrusion, roller-milling or kneading. The product of such mechanical working is typically formed into granules suitable for processing to shaped articles. The molecular weight of the microbiologically produced copolymer as introduced is preferably at least 500000, especially at least 800000, to allow for a decrease during melt processing. The mixture may contain processing aids such as one or more nucleating agents; and processing conditions are chosen preferably so as to maximise the development of crystallinity, to exploit this known property of the PHBV copolymer. Examples of nucleating agents are boron nitride, calcium carbonate and metal soaps such as zinc stearate.

In a further aspect the invention provides a process of making a shaped article by confining the composition to shaping surfaces. Methods of confining include casting from melt into a surface or in a mould, injection moulding , blow moulding and extrusion. A particularly useful method comprises extrusion of melt through a flat or circular die to give a flat or tubular film. The film may be subjected to stretching in the extrusion direction or transversely thereto or both, possibly with application of heat; for tubular film such stretchings may be effected at least partly by pneumatic pressure. As a sub-genus of extrusion through a circular due to give tubular film, the method may employ a die with a rotating dentate core and/or stator, so that a tubular net results. The tube or net may be slit to produce sheet. Processing is e.g. at 100-200°C.

In a yet further aspect the invention provides shaped articles made of the composition and compound structures comprising one or more such articles. Such shaped articles include substantially rigid articles such as vessels, pipes and pipe fittings, and flexible articles such as films, sacks and tubes of thickness typically in the range 0.001 to 1mm especially up to 0.lmm; and also nets of thread thickness typically in the range 0.01 to 1mm. Compound structures include especially combinations of such film, sack or tube or net with wood pulp, cellulose fibres or fibres of microbiologically produced copolymer such as PHB, PHBV and, indeed, compositions according to the invention. Particular structures include disposable diapers, tampons and wound dressings.

The invention may be further illustrated by reference to the following examples, in which percentage compositions are by weight unless otherwise stated and MI denotes the melt index in g/10 min according to ASTMD 1238.

### EXAMPLE 1

A series of compositions was prepared comprising at least two of the following ingredients:
PHBV of 15 or 22 mol % 3-hydroxyvalerate.
EVA of VA content 19% w/w, MI 23 g/10 min ("MICROTHENE" MV 769-00 ex Quantum Chemicals).
EVA wax AC400 ex Allied Chemicals (viscosity 610 cps at 140°C). LDPE of MI 6g/10 min ("MICROTHENE" MN72200 ex Quantum Chemicals).

The compositions were injection moulded into ASTM D356 impact and D638 tensile bars. Physical properties were determined approximately 1.5 months after moulding.

Flexural Modulus (3 point bend) represents the average value obtained from 4 replicates as determined on an Instron 1122, using a span length of 67 mm, and a crosshead speed of 5mm.min⁻¹.

Tensile properties represent the average obtained from 5 replicates as determined on an Instron 1122, using a gauge length of 10 mm and a crosshead speed of 10 mm.min⁻¹.

Izod impact strength (1 mm notch radius) represents the average obtained from 5 replicates as determined using a Zwick pendulum impact testing machine.

Weight loss is as determined on samples left in contact with microbiologically active soil for 79 days; under such conditions a sample of homopolymer of 3-hydroxybutyrate showed an 18% loss in weight.

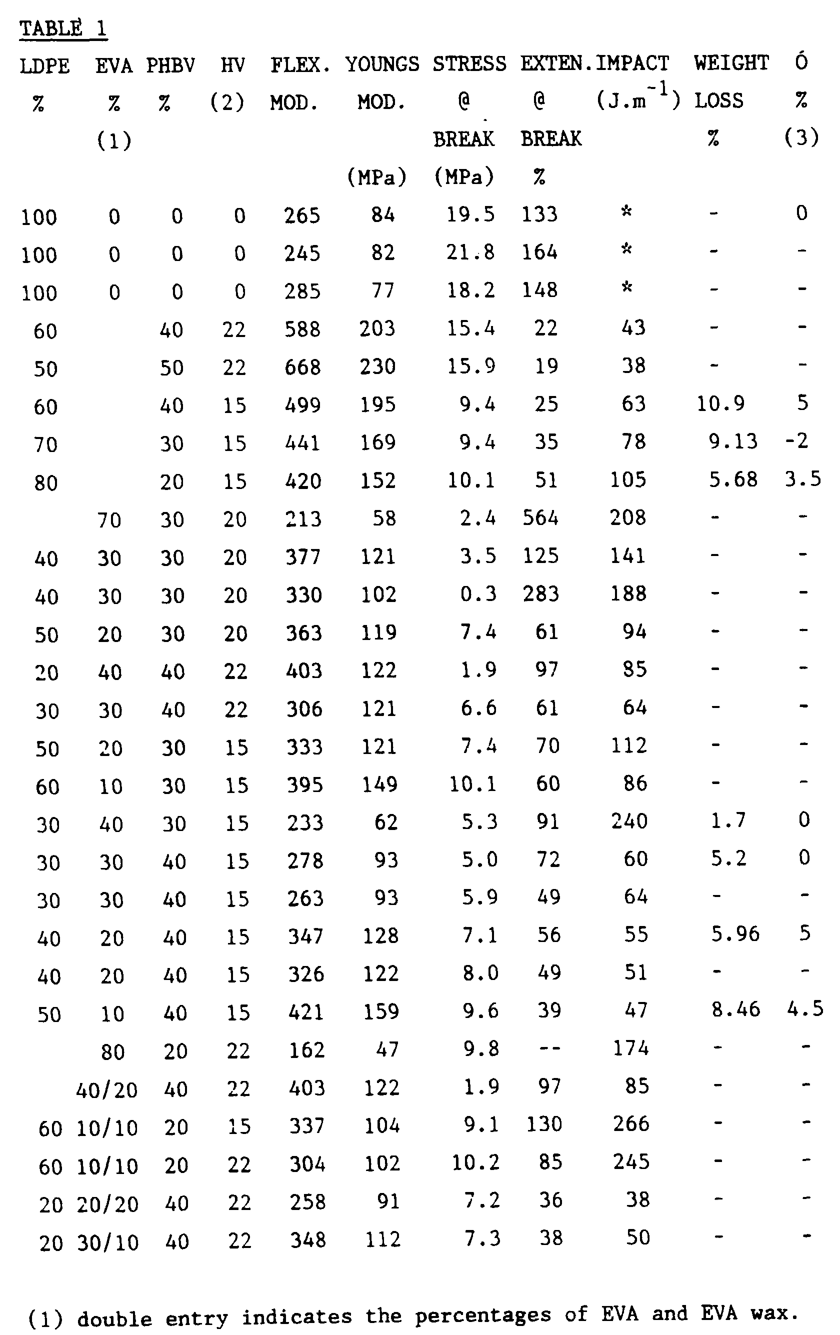

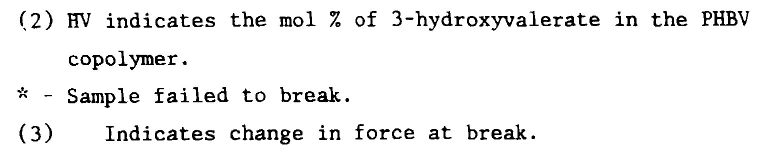

It is evident that significant biodegeneration takes place, despite the presence of LDPE and/or EVA. However, it was observed also that exposure to soil caused only slight loss in mechanical strength.

### EXAMPLE 2

The following polymer ingredients were used:
PHBV containing 14 mol % of HV units, with 10 phr of triacetin plasticiser;
EVA of MI 3.0 ml/10 min, 18% w/w VA. (CIL 1820)
LDPE CIL type 209

Various compositions % w/w were blown into films,by the conventional bubble method. Mechanical properties were measured and the biodegenerability of the films was assessed after 56 days' contact with a microbiologically active soil.

**TABLE 2**

| LDPE % | EVA % | PHBV % | YIELD STGTH MPa | BREAK STGTH MPa | ELONG ACTION % | DENSITY KG M⁻³ | WEIGHT LOSS % | STGTH LOSS % |
|---|---|---|---|---|---|---|---|---|
| - | 50 | 50 | MD 9.5 | 15.4 | 479 | | | |
| | | | TD 10.9 | 19.8 | 487 | Over 1.0 | 41.7 | 23.1 |
| - | 75 | 25 | MD 7.8 | 22.1 | 560 | | | |
| | | | TD 6.4 | 14.2 | 476 | 995-1000 | 5.1 | - 7.8 |
| 50 | - | 50 | - | - | - | - | 41.1 | 40.5 |
| - | 20 | 80 | - | - | - | - | 81.4⁺ | 100 |
| 100 | - | - | 9.0 | 14.0 | 650 | 919 | 0.0 | -26 |
| - | - | 100 | - | - | - | - | 100.0 | 100 |
| * MD = machine direction; TD - transverse direction | | | | | | | | |

| | | | | | | | | |
|---|---|---|---|---|---|---|---|---|
| ⁺ correction of copying error in priority application | | | | | | | | |

It is evident that significant biodegradation, lending to loss in weight and strength, can be obtained if the content of PHBV is high enough. Thus material at under 50% PHBV could be used in making diapers, tampons and dressings to be disposed of as landfill.

### EXAMPLE 3

Using a PHBV sample containing 15.6 mol % HV and 1 phr boron nitride as nucleating agent, further compositions were formed into films and the biodegenerability assessed in a similar manner to Example 2, except that the time period was 79 days.

**TABLE 3**

| EVA % | VA IN EVA MOL% | EVA MI | PHBV % | YIELD STGTH MPa | BREAK STGTH MPa | YOUNG'S MODULUS MPa | WEIGHT LOSS % |
|---|---|---|---|---|---|---|---|
| 70 | 20 | 1.8 | 30 | MD 7.4 | 7.9 | 290 | 15.5 |
| | | | | TD 4.3 | 5.2 | 140 | |
| 80 | 20 | 1.8 | 20 | MD 5.8 | 6.5 | 201 | 2.67 |
| | | | | TD 4.5 | 4.9 | 79 | |
| 70 | 12 | 2.5 | 30 | MD 9.55 | 11.7 | 327 | 11.6 |
| | | | | TD 5.8 | 6.0 | 177 | |
| 80 | 12 | 2.5 | 20 | MD 7.5 | 10.6 | 222 | 2.22 |
| | | | | TD 4.4 | 5.5 | 112 | |

It is evident that significant weight loss occurs at the higher PHBV and EVA contents.

### EXAMPLE 4

Further compositions were injection moulded into impact and tensile test bars. The following physical properties were determined.

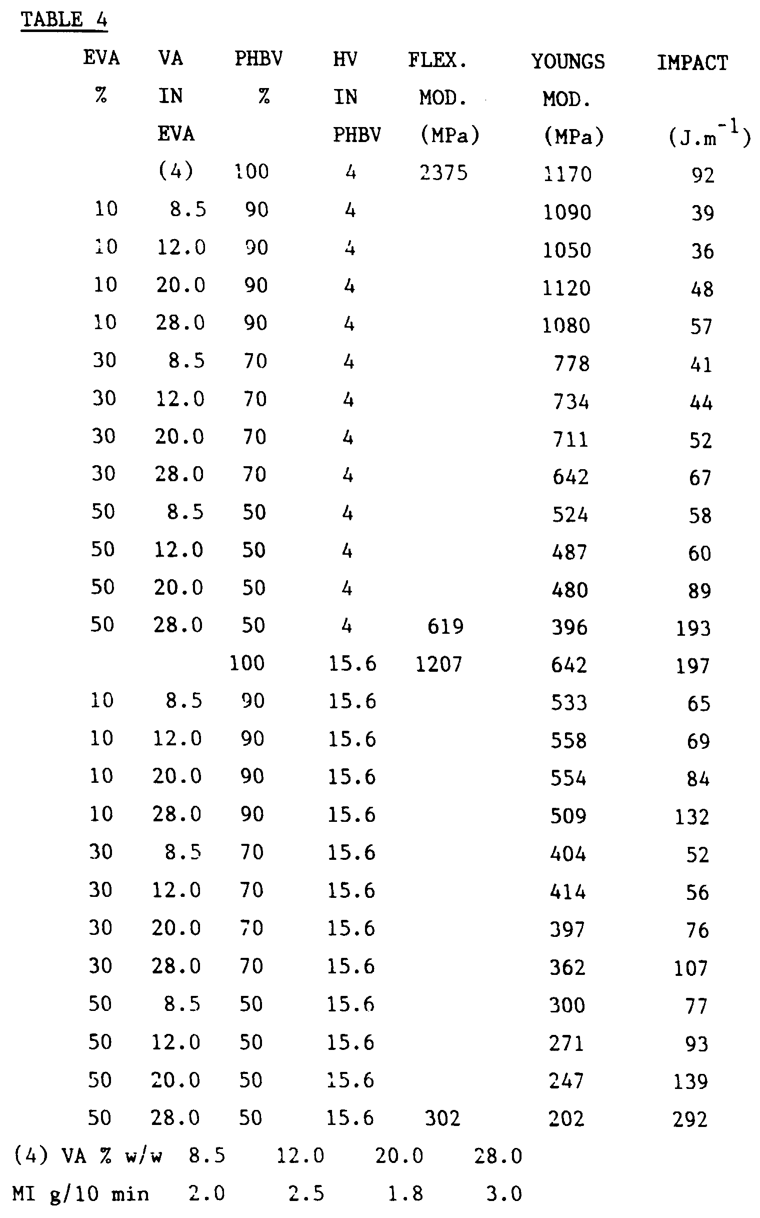

### EXAMPLE 5

Further compositions were formed into impact and tensile test bars and the physical properties determined as in Example 4.

**TABLE 5**

| EVA (5) % | PHBV % | HV IN PHBV | FLEX. MOD. (MPa) | YOUNGS MOD. (MPa) | NOTCHED IMPACT (J.m⁻¹) | WEIGHT LOSS % |
|---|---|---|---|---|---|---|
| | 100 | 15.6 | 1082 | 642 | 250 | 24.01 |
| 10 | 90 | 15.6 | 867 | 465 | 151 | - |
| 20 | 80 | 15.6 | 619 | 374 | 101 | - |
| 30 | 70 | 15.6 | 462 | | 117 | 23.6 |
| 40 | 60 | 15.6 | 457 | 273 | 304 | 22.35 |
| 50 | 50 | 15.6 | 323 | 51 | 461 | 17.75 |
| 60 | 40 | 15.6 | 232 | 132 | 367 | 10.36 |
| 70 | 30 | 15.6 | 156 | 80 | 287 | 4.38 |
| 80 | 20 | 15.6 | 97 | 50 | 210 | 1.5 |
| 100 | 0 | - | 47 | 17 | - | - |

| | | | | | | |
|---|---|---|---|---|---|---|
| (5) EVA containing 28% w/w of VA and having NI 3.0 g/10 min was used in all compositions in this example. | | | | | | |

### EXAMPLE 6

Further compositions, using PHBV comprising 15 mol of HV and including some which contained other biodegradable materials apart from PHBV, were formed into tensile test bars and the physical properties determined as in Examples 4 and 5. Some of these compositions, as 0.5 mm compression moulded film, were tested for biodegradation for 30 days at 25°C in microbially active soil.

Results were as follows.

**TABLE 6**

| LDPE % | EVA (6) % | PHBV % | ST. (1) % | TRI. (2) % | Ca (3) % | BIO (4) % | POLY (5) % | FLEX. MOD. (MPa) | YOUNGS MOD. (MPa) | STRS @ MPa | EXTN BK % | WGT LOSS % |
|---|---|---|---|---|---|---|---|---|---|---|---|---|
| - | 10a | 50 | - | 20 | 20 | 90 | 56 | 344 | 204 | 7 | 27 | 45.1 |
| - | 10 | 40 | - | 25 | 25 | 90 | 44 | 379 | 193 | - | - | - |
| - | 10a | 50 | 10 | 15 | 15 | 90 | 56 | 609 | 248 | 5 | 11 | 78.9 |
| - | 20a | 40 | 10 | 15 | 15 | 80 | 50 | 345 | 134 | - | - | - |
| - | 40 | 30 | - | 15 | 15 | 60 | 50 | 291 | 132 | - | - | - |
| - | 40a | 30 | 30 | - | - | 60 | 50 | 580 | 352 | - | - | - |
| - | 40 | 30 | 10 | - | 20 | 60 | 50 | 904 | 527 | - | - | - |
| - | 40a | 30 | 20 | 5 | 5 | 60 | 50 | 458 | 211 | - | - | - |
| - | 50a | 25 | 10 | 7.5 | 7.5 | 50 | 50 | 331 | 137 | - | - | - |
| - | 50 | 20 | - | 15 | 15 | 50 | 40 | 216 | 86 | - | - | - |
| - | 50 | 30 | 10 | - | 10 | 50 | 60 | 645 | 332 | 6 | 20 | 31.2 |
| 20 | 30 | 30 | 10 | 5 | 5 | 50 | 60 | 375 | 219 | - | - | - |
| 30 | 30 | 30 | - | 5 | 5 | 40 | 75 | 329 | 191 | 3 | 28 | 10.6 |
| - | 60 | 30 | 10 | - | - | 40 | 75 | 486 | 274 | - | - | - |
| - | - | 50 | - | 10 | 10x | 60 | 83.3 | 605 | 345 | 14 | 16 | 43.3 |
| - | - | 56 | - | 10 | 10y | 66 | 85 | 461 | 355 | 13 | 50 | 63.8 |

| | | | | | | | | | | | | |
|---|---|---|---|---|---|---|---|---|---|---|---|---|
| (1) ST. = starch | | | | | | | | | | | | |
| (2) TRI. = triacetin | | | | | | | | | | | | |
| (3) Ca. = calcium carbonate | | | | | | | | | | | | |
| (4) BIO = Biodegradable content of composition | | | | | | | | | | | | |
| (5) POLY = Percentage of biodegradable content which is PHBV. | | | | | | | | | | | | |
| (6) VA = 12% w/w in samples marked a; 8% in others. MI 2g/10mins for all EVAs. (x) Contained also 30% ) polycaprolactone "TONE" 700 (y) Contained also 24% ) ex Union Carbide | | | | | | | | | | | | |

All these samples were denser than fresh water.

The samples for which weight loss data are quoted had the following properties after the exposure to soil.

**TABLE 7**

| % WGT LOSS | COMMENTS |
|---|---|
| 78.9 | Broke into small pieces. Very fragile |
| 45.1 | Large amount of degradation - some fragmentation |
| 31.2 | Large amount of degradation - but still complete |
| 10.6 | Some degradation, but still complete |
| 43.3 | Degradation occurred at one end of strip |
| 63.8 | Significant degradation, broke into several pieces |

## Claims

1. A biodegenerable plastics composition comprising at least one synthetic polymer selected from the class consisting of polyethylene, polystyrene and an ethylene copolymer, blended with 10 to 90% w/w on said composition of a biodegradable material at least 20% w/w of which is microbiologically produced copolymer containing 3-hydroxybutyrate and 3-hydroxyvalerate.

2. A composition according to Claim 1 in which the ethylene copolymer contains 5 to 30 w/w % of vinyl acetate on the total of ethylene and vinyl acetate.

3. A composition according to Claim 1 or Claim 2 containing also one or more biodegradable or environmentally acceptable improvers.

4. A composition according to any one of Claims 1 to 3 which comprises a ternary blend of
(1) said biodegradable material;
(2) at least one synthetic polymer selected from polyethylene and polystyrene; and
(3) said ethylene copolymer.

5. A composition according to any one of the preceding Claims in which the microbiologically produced copolymer contains between 3 and 25, especially between 5 and 15, mol % of 3-hydroxyvalerate.

6. A composition according to any one of the preceding claims having a density greater than that of fresh water.

7. A method of making a composition according to any one of the preceding claims by mixing the constituents in conditions in which at least one of its polymeric constituents is in liquid form.

8. A process of making a shaped article by confining to shaping surfaces a composition according to any one of Claims 1 to 6 or as made by a method according to Claim 7.

9. A shaped article made of a composition according to any one of Claims 1 to 6 or as made by a method according to Claim 7.

10. A compound structure comprising a shaped article according to Claim 9.

## Patentansprüche

1. Bioabbaubare Kunststoffzusammensetzung, umfassend zumindest ein synthetisches Polymer, ausgewählt aus der Klasse bestehend aus Polyethylen, Polystyrol und einem Ethylen-Copolymer, gemischt mit 10 bis 90 % M/M, bezogen auf die Zusammensetzung, eines bioabbaubaren Materials, von dem zumindest 20 % M/M ein mikrobiologisch produziertes Copolymer sind, das 3-Hydroxybutyrat und 3-Hydroxyvalerat enthält.

2. Zusammensetzung nach Anspruch 1, worin das Ethylen-Copolymer 5 bis 30 M/M Vinylacetat, bezogen auf die Gesamtheit von Ethylen und Vinylacetat, enthält.

3. Zusammensetzung nach Anspruch 1 oder Anspruch 2, welche auch ein oder mehrere bioabbaubare oder umweltverträgliche Verbesserungsmittel enthält.

4. Zusammensetzung nach einem der Ansprüche 1 bis 3, umfassend eine ternäre Mischung von:
(1) dem bioabbaubaren Material;
(2) zumindest einem synthetischen Polymer, ausgewählt aus Polyethylen und Polystyrol; und
(3) dem Ethylen-Copolymer.

5. Zusammensetzung nach einem der vorhergehenden Ansprüche, worin das mikrobiologisch produzierte Copolymer zwischen 3 und 25, insbesondere zwischen 5 und 15, Mol-% 3-Hydroxyvalerat enthält.

6. Zusammensetzung nach einem der vorhergehenden Ansprüche mit einer höheren Dichte als jener von Frischwasser.

7. Verfahren zur Herstellung einer Zusammensetzung nach einem der vorhergehenden Ansprüche durch Mischen der Bestandteile unter Bedingungen, unter denen zumindest einer ihrer Bestandteile in flüssiger Form vorliegt.

8. Verfahren zur Herstellung eines geformten Artikels durch das Begrenzen einer Zusammensetzung nach einem der Ansprüche 1 bis 6, oder wie durch das Verfahren nach Anspruch 7 hergestellt, mittels Formoberflächen.

9. Geformter Artikel, hergestellt aus einer Zusammensetzung nach einem der Ansprüche 1 bis 6, oder wie durch das Verfahren nach Anspruch 7 hergestellt.

10. Verbundstruktur, welche einen geformten Artikel nach Anspruch 9 umfaßt.

## Revendications

1. Composition plastique susceptible de biodégénérer comprenant au moins un polymère synthétique choisi dans la classe constituée d'un polyéthylène, d'un polystyrène et d'un copolymère d'éthylène, mélangé avec 10 à 90 % p/p par rapport à ladite composition d'un matériau biodégradable dont au moins 20 % p/p de celui-ci est un copolymère produit microbiologiquement contenant du 3-hydroxybutyrate et du 3-hydroxyvalérate.

2. Composition selon la revendication 1, dans laquelle le copolymère d'éthylène contient 5 à 30 % p/p d'acétate de vinyle par rapport au total d'éthylène et d'acétate de vinyle.

3. Composition selon la revendication 1 ou la revendication 2, contenant aussi un ou plusieurs améliorants biodégradables ou acceptables sur le plan de l'environnement.

4. Composition selon l'une quelconque des revendications 1 à 3, qui comprend un mélange ternaire de
(1) ledit matériau biodégradable;
(2) au moins un polymère synthétique choisi parmi un polyéthylène et un polystyrène; et
(3) ledit copolymère d'éthylène.

5. Composition selon l'une quelconque des revendications précédentes dans laquelle le copolymère produit microbiologiquement contient entre 3 et 25, spécialement entre 5 et 15 % en moles de 3-hydroxyvalérate.

6. Composition selon l'une quelconque des revendications précédentes, ayant une densité plus grande que celle de l'eau douce.

7. Procédé pour préparer une composition selon l'une quelconque des revendications précédentes en mélangeant les constituants dans des conditions dans lesquelles au moins un de ses constituants polymères est sous une forme liquide.

8. Procédé pour fabriquer un article profilé en confinant à des surfaces de mise en forme une composition selon l'une quelconque des revendications 1 à 6 ou telle que préparée par le procédé selon la revendication 7.

9. Article profilé fait d'une composition selon l'une quelconque des revendications 1 à 6 ou telle que préparée par le procédé selon la revendication 7.

10. Structure composée comprenant un article profilé selon la revendication 9.
